# EUROPEAN PATENT SPECIFICATION

(11) **EP 2 998 349 B1**
(45) Date of publication and mention of the grant of the patent: **17.01.2018**
(21) Application number: 15002637.5
(22) Date of filing: 09.09.2015
(51) Int. Cl.: C08K 5/3492, C08K 3/00, C08K 5/00, C08K 3/22

(54) **ORGANIC MATERIALS AS FIRE AND FLAME RETARDANT SYNERGISTS**
ORGANISCHE MATERIALIEN ALS BRAND- UND FLAMMHEMMENDE SYNERGISTEN
MATÉRIAUX ORGANIQUES COMME SYNERGISTES RETARDANT LE FEU ET LES FLAMMES

(30) Priority: 16.09.2014 EP 14003216
(43) Date of publication of application: 23.03.2016
(73) Proprietor: MCA Technologies GMBH, CH-4105 Biel-Benken (CH)
(72) Inventor: Kaul, Bansi Lal, CH 4105 Biel-Benken (CH)
(74) Representative: D'haemer, Jan Constant

(56) References cited:
- WO-A1-2012/174712
- US-A- 4 504 610
- US-A1- 2010 227 952
- US-A1- 2013 206 448
- US-A1- 2014 011 923
- Edward D. Weil: "FLAME RETARDANTS, PHOSPHORUS" In: "Kirk-Othmer Encyclopedia of Chemical Technology, vol. 11", 18 October 2001 (2001-10-18), John Wiley & Sons, Inc., XP055321165, pages 484-510, DOI: 10.1002/0471238961.1608151923050912.a01.pu b2, * page 487 *
- Sergei Levchik: "Phosphorus-Based FRs" In: "Non-Halogenated Flame Retardant Handbook", 18 April 2014 (2014-04-18), John Wiley & Sons, Inc., Hoboken, NJ, USA, XP055284061, ISBN: 978-1-118-68624-9 pages 17-74, DOI: 10.1002/9781118939239.ch2,

## Description

Fire and flame retardants are widely used as plastic additives for the safer use-in-service of the resulting plastic materials. For many applications such as wire and cable and electric and electronic applications the use of fire and flame retardants as part of the non-conducting insulation materials is mandatory.

There are many types of fire and flame retardants available. The most commonly used are the inorganic substances, the halogenated organic compounds, the organophosphorus compounds, or other organic substances.

Halogen-containing fire retarding additives are no longer fulfilling the conditions which are now demanded by various industry and governmental regulations. For example the polymer resins for e.g. electric and electronic applications have to comply with the RoHS15 and WEEE16 directives:
*15: Directive 2002*/*95*/*EC on Restriction of certain hazardous Substances in Electric and Electronic Equipment*
*16 Directive 2002*/*96*/*EC on Waste of Electric and Electronic Equipment*

The use of halogen-containing fire retardant additives or materials in plastics/polymers is also not allowed in the building and construction industries in Europe (Building European Union Construction Products Directive CE -Marking 0123); nor in the transportation industry, such as railways (CEN/TS 45545), fire safety for sea vessels (ISO 5659-2 extended by ISO 21489) and in aircraft construction.

As an alternative to halogen containing flame retardants either
a) inorganic mineral flame retardants such as metal hydroxides or
b) so-called intumescent systems based on phosphate salts such as ammonium polyphosphate and piperazine polyphosphate
are mostly used.

Mineral metal hydroxides are the most preferred of all non-halogen flame retardants. However, because of their low efficacy they need to be added in high dosages to meet the required properties to fulfill the regulations. High dosages make the processing difficult and less economical. Moreover the resulting plastic items show poor physical properties, and the disadvantage of energy wasting.

Intumescent systems, on the other hand, require lower dosages, but are susceptible to hydrolysis (instability towards water) and are, therefore, not desired for the electrical applications such as for the insulation of cables, electronics and building & construction. They do not meet ICE (IEV 212-01-01) E&E conformity of insulating materials over a longer period of time, due to the water pick-up. For example in Germany, the Deutsches Institut für Bautechnik (DIBIt) defines the standards for the intumescent systems to withstand the various environmental conditions, particularly the humidity.

The most commonly encountered problems are as following;
- Halogen (and antimony)-free. Halogen-containing are no more desired or even allowed in the electronic industry, because of their potential of forming toxic dioxins in the event of fire and disposal, and their persistence in the environment. They seem to be non-destructible
- Inefficiency & the collateral effects, waste of energy in processing and dead weight & poor quality of the resulting items, particularly with the use of the largest volume metal hydroxides (as halogen-free replacements)
- Hydrolytic (water) instability, of the much more efficient intumescent systems based on phosphate salts such as ammonium, melamine and piperazine (as halogen-free replacements)
- ICE (IEV 212-01-01) E&E conformity of insulating materials
- Reactivity towards the polymers, such as of melamine & melamine polyphosphates with polyamides and polyesters, used in electric and electronic applications
- Incompatibility particularly of small molecules, leading to slow release and environmental pollution. Such fire retardants have even been found in human body after being released from the plastics and picked-up by living cells.
- Safety beyond fire protection, i.e. smoke release & heat flux in the event of fire
- Disposal of, after the service-life/<waste-to-energy>
- Last but not least the processing/dispersion, because of high loadings

The fundamental issue of the most problems is the required high loadings of the flame & fire retardants, many times far exceeding even the weight of the basic polymers themselves. Hence, if the required ratio of polymer to fire and flame retardants in the compositions could be increased by reducing the loadings of the fire and flame retardants most of the said problems would be collectively resolved.

It has now been found that the use of the nitrogenous water-insoluble compounds, consisting of an oligomer or a polymer of a 1, 3, 5-triazine derivative, and having the general formula I: 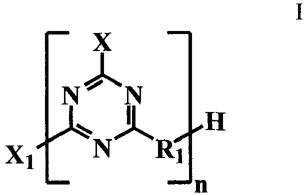 wherein
X is a halogen
or 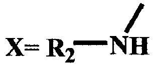 or a heterocyclic radical containing in the ring at least one nitrogen atom which radical is linked to the triazine ring through one of such nitrogen atoms,
R₂ is alkyl or cycloalkyl,
R₁ is a divalent radical of piperazine of the formula 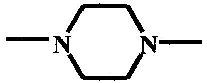
or a divalent radical of the type 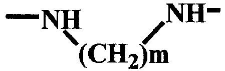 or 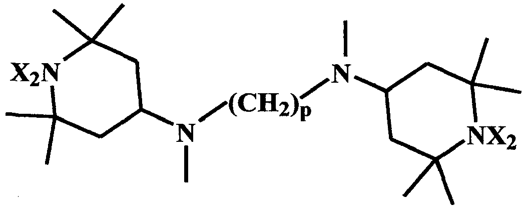
n is an integer from 2 to 30, extremes included,
m is an integer from 2 to 6, extremes included,
p is an integer from 2 to 12, extremes included, and
X₁= OH, NH2 or X whereby X and X₁ may be the same or different,
X₂= Hydrogen or a C₁-C₄ alkyl group
as universal synergists alleviates the known deficiencies, including environmental issues, of most currently used fire and flame retardants. More particularly, the compounds of formula "I" act as synergists in combination with mineral flame retardants and alleviate respectively eliminate the said deficiencies of both a) and b) classes of flame retardants as follows:
c) they enable to reduce the loadings of a) for the same efficacy
d) they enable to eliminate or reduce the use of water instable phosphates in b)

Compounds of formula I are described in the USP 4,504,610 and USP 8,202,924, and are used as fire retardants in combination with ammonium phosphate for so-called intumescence systems b) only. It has been assumed that the presence of phosphates as acid source for the fire resistant char formation is absolutely necessary (G Camino and R Delobel, Intumescence, Chapter 7, page 218-, in Fire Retardancy of polymeric materials edited by A.F. Grand and C. Wilkie; publisher Marcel Dekker Inc, New York 2000; ISBN 0-8247-8879-6).

Fire and flame retardants are as defined by the Phosporus, Inorganic & Nitrogen Flame Retardants Association (pinfa) and in "Non-Halogenated Flame Retardant Handbook, edited by A.B. Morgen & C.A. Wilkie; publisher Scrivener Publishing MA 01915-6106; 2014; ISBN 978-1-118-68624-9

The object of the invention, therefore, are polymer compositions containing synergistic blends of (A) metal hydroxides or metal phosphinates retardants or nitrogen based flame retardants or halogen based flame retardants or N-alkoxy hindered amine radical generating flame retardants *without the use of phosphates* and (B) compounds of Formula I 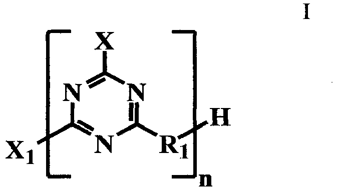 wherein
X is a halogen
or 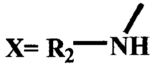 or a heterocyclic radical containing in the ring at least one nitrogen atom which radical is linked to the triazine ring through one of such nitrogen atoms,
R₂ is alkyl or cycloalkyl,
R₁ is a divalent radical of piperazine of the formula 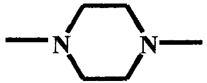
or a divalent radical of the type 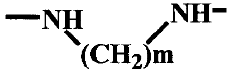 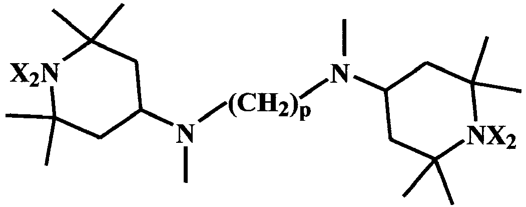
n is an integer from 2 to 30, extremes included,
m is an integer from 2 to 6, extremes included,
p is an integer from 2 to 12, extremes included, and
X₁= OH, NH2 or X whereby X and X₁ may be the same or different,
X₂= Hydrogen or a C₁-C₄ alkyl group.

Such compound is present in the composition in amounts from 0.1 to 10 % by weight of the composition, preferably in amounts from 0.5 to 5 % by weight.

As fire and flame retardants, phosphorus based flame retardants or inorganic flame retardants or nitrogen based flame retardants or halogen based flame retardants or N-alkoxy hindered amine radical generating fire and flame retardants can be used.

It has been found that the compounds of formula "I" surprisingly exhibit exceptional properties as fire retardant synergists by so-called "self-immolation" principle of fire retardancy, without the use of phosphates. In the event of a fire, compounds of formula "I" undergo a self-burning and charring process, thereby forming fire shields and nipping the fire in the bud. Table 1 below underlines such excessive char formation in the event of fire. Thus, there is a 15-20 % more fire protecting char formation in case of samples containing compound of Formula II than in case of the samples not containing this compound.

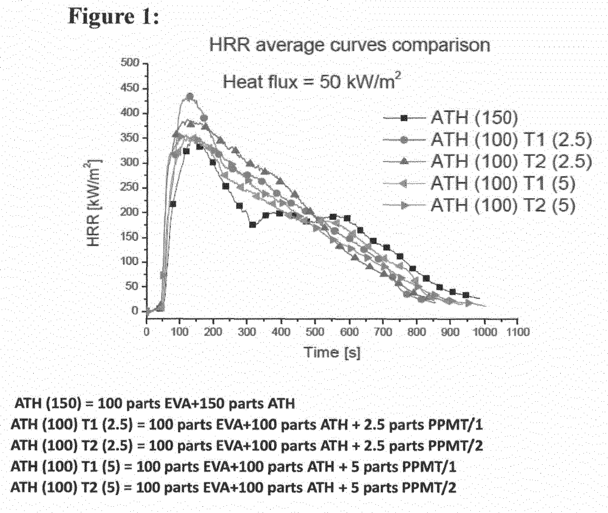

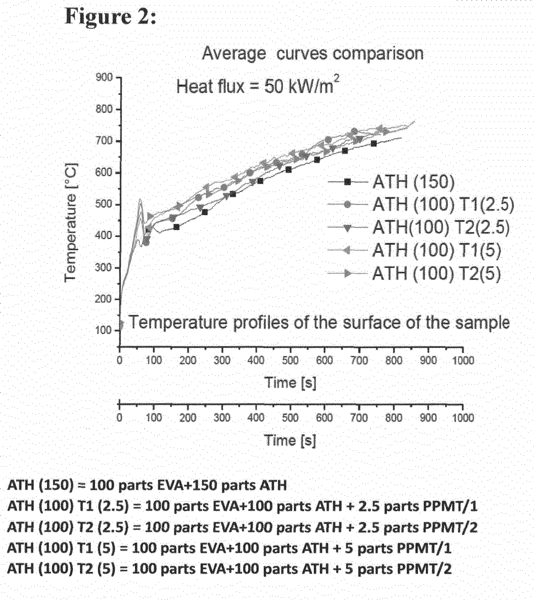

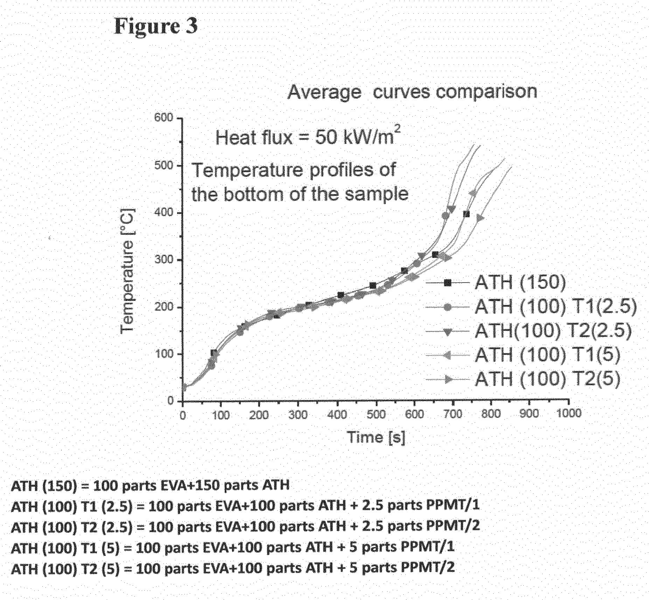

The resulting polymer composites, such as EVA, containing such fire retardants according to this invention also release very low heat upon burning. Importantly, the smoke toxicity and corrosivity are also low because of low or no halogens in the fire retardants according to this invention. Table 2 and Figures 1, 2 & 3 further underline the effectiveness of the compounds of formula I as fire and flame retardant synergists. Thus, in spite of replacing 50 parts of aluminium trihydroxide (ATH) with just 2.5-5 parts of the compound of Formula II in a typical cable polymer composition, all critical parameters of fire and flame retardancy such as flame out time, heat release rate (HRR), peak heat release rate (pkHRR), total heat release (THR) remain the same, in spite of almost 15% more incinerable organic material present (Table 2).

Moreover, the resulting polymer compositions when used for cable applications show the following advantages:
e) For the same amount (100%) of base polymer/resin required to be used for insulation-jacketing of the same length of cable, almost 18% less requirement (in weight) of the corresponding polymer composition (Example: 100 parts of base polymer = 250 parts of compound A (polymer +ATH) = 205 parts of compound AP (polymer + ATH + PPMT) i.e. 82 % of compound A)
f) For the same thickness of the insulation ca. 10% less of the corresponding polymer composition is needed (Table 2)
g) Ease of processing, more productivity, less energy demand
h) Non-ionic, for better E&E (IEV) conformity of insulating materials
i) Less abrasion of the processing equipment
j) Lighter-weight, better-quality, and eco (disposal) cable
(LW-0LH-HQ-E= Light weight-zero/low halogen-high-quality eco cable)

Nano-clays and composites are also used as synergists for flame retardants. They are inorganic materials with the following advantages for the compounds of formula I:
❖ Light-weight purely organic materials of high efficacy
❖ In the event of fire own expanded char formation as fire-wall, due to high C & N content
❖ Non-ionic! Perhaps better E&E (IEV) conformity of insulating materials
❖ Better heat stability versus organo-clays
❖ Light stabilizing effect due to chemical relationship with light stabilizers
❖ Universal applications

Similarly, other inorganic compounds such as antimony oxides, and borate salts are also used as synergists for certain applications. However, their efficacy is low, as is to be expected of inorganic materials, alone due to their high density.
Organic synergists of high efficacy, as is to be expected due to their low density and better chemical relationship to the organic polymers, are few and far between.

Thus it has now been found that the compounds of Formula I are also suitable as synergists of halogen containing flame retardants in place of antimony oxides. Antimony oxides are no more desired as flame retardant synergists because of their potential toxicity.

For engineering polymers such as polyamides and polyesters, dialkyl phosphinates such as aluminium diethylphosphinate, with synergists, are commonly used as fire retardants. This chemistry increases corrosion in processing equipment and lowers mechanical properties (compounding world, December 2012). It has now been found that the compounds for Formula I combined with such dialkyl phosphinates do not cause such corrosion and degradation of the mechanical properties of the resulting polymer formulations.

It has also been found that compounds of I are also suitable as synergists for N-alkoxy hindered amine radical generating fire retardants such as Flamestab NOR of BASF, besides alleviating their deficiencies such as low heat stability.

### DESCRIPTION OF THE CONE TEST

The tests are done with the samples and have the purpose to give an assessment about the combustion behaviour under cone calorimeter conditions.

The ISO 5660 norm defines cone calorimeter parameters driving. During the cone calorimeter test, the materials are subjected to a heat flux of 50 kW/m².

The samples are ignited by a spark created by an electrical device. Combustion products are aspirated in a duct, where they are analyzed.

Heat Release Rate (HRR [kW/m²) curve is obtained from measuring the oxygen percentage that is consumed during the combustion. HRR is one of the most used parameters to evaluate the burning behavior.

Other important factors are:
Total Heat Evolved (THR [MJ/m²])
Flame Out (FO [s])
Peak of Heat Release Rate (pkHRR [kW/m²])

All tests are performed three times to check repeatability. All parameters are reported with their experimental deviation, calculated as (maximum value - minimum value)/2.

Surface temperature measurements were performed during cone calorimeter tests, using K-type 0.5 mm stainless steel sheathed thermocouple. Thermocouple was carefully placed and supported to keep contact with the upper surface of the sample throughout the experiment.

The temperature of the sample bottom layer was measured inserting a K-type 1 mm stainless steel sheathed thermocouple parallel to the specimen's surface between the polymer specimen and the aluminium foil.

The following examples illustrate the invention.

### Example 1

The following materials were used
- PPMT/T1 and /T2 : two samples of Poly(piperazinyl,morpholinyl,triazine); compound of formula II 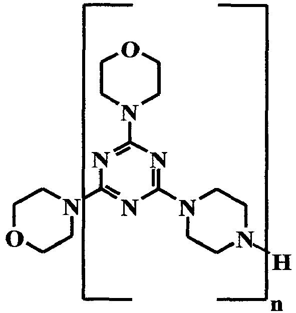 Formula II (Example 3 compound IIIa of the USP 8,202,924)
- EVA(ethyl vinyl acetate) : ELVAX ® 470 DuPont (19%VA)
- ATH (aluminium trihydroxide) : Nabaltec Apyral® 40CD

The materials were dry-blended in the required proportions and extruded using a twin screw co-rotating extruder Leistriz 18-40D.

The resulting granulates were pressed to samples of 100mm x 100mm x 6 mm size and subjected to the cone calorimeter test as described above

### CONE TEST RESULTS

**Table 1: Residue mass (char) at the end of cone calorimeter test at 50 kW/m²**

| Materials (parts) | Specimen number | Residue mass (g) | Residue mass % of materials | Residue mass % of ATH |
|---|---|---|---|---|
| EVA = 100 | 1 | 32.01 | 38 | 100 |
| ATH = 150 | 2 | 32.31 | 38 | 100 |
| PPMT = 0 | 3 | 31.54 | 38 | 100 |
| EVA = 100 | 1 | 22.43 | 30 | 120 |
| ATH = 100 | 2 | 22.33 | 30 | 120 |
| PPMT/T1 = 2.5 | 3 | 22.04 | 29 | 115 |
| EVA = 100 | 1 | 22.28 | 30 | 115 |
| ATH = 100 | 2 | 22.14 | 29 | 120 |
| PPMT/T2 = 2.5 | 3 | 22.16 | 29 | 120 |
| EVA = 100 | 1 | 23.20 | 30 | 120 |
| ATH = 100 | 2 | 23.05 | 30 | 120 |
| PPMT/T1 = 5 | 3 | 23.00 | 30 | 120 |
| EVA = 100 | 1 | 22.68 | 30 | 120 |
| ATH = 100 | 2 | 22.46 | 30 | 120 |
| PPMT/T2 = 5 | 3 | 22.47 | 30 | 120 |

- EVA(ethyl vinyl acetate) : ELVAX ® 470 DuPont (19%VA)
- ATH (aluminium trihydroxide): Nabaltec Apyral® 40CD
- PPMT/T1 and /T2 : two samples of Poly(piperazinyl,morpholinyl,triazine); compound of formula II

**Table 2: Average data of the cone calorimeter test at 50 kW/m²**

| Materials (parts) | Sample weight (g) | Incinerable organic material (%) | Weight For same volume (%) | Flame Out (s) | HRR (kW/m²) | pkHRR (kW/m²) | THR (MJ/m²) |
|---|---|---|---|---|---|---|---|
| EVA = 100 | 83.3 ± 0.1 | 100 (EVA 100) | 100 | 859 ± 36 | 173 ± 21.8 | 356 ± 22.1 | 155.4 ± 13.0 |
| ATH = 150 | | | | | | | |
| PPMT = 0 | | | | | | | |
| EVA = 100 | 75.4 ± 0.1 | 113 (EVA 110) | 89 | 766 ± 11 | 202.9 ± 7.0 | 443.8 ± 25.6 | 164.5 ± 3.6 |
| ATH = 100 | | | | | | | |
| PPMT/T1 = 2.5 | | | | | | | |
| EVA = 100 | 75.3 + 0.1 | 113 (EVA 110) | 89.3 | 780 ± 24 | 201.3 ± 6.6 | 393.1 ± 14.4 | 169.2 ± 7.1 |
| ATH = 100 | | | | | | | |
| PPMT/T2 = 2.5 | | | | | | | |
| EVA = 100 | 76.3 ± 0.1 | 115.8 (EVA 110) | 90.5 | 835 ± 7 | 178.5 ± 1.1 | 357.1 + 14.1 | 157.0 ± 0.8 |
| ATH = 100 | | | | | | | |
| PPMT/T1= 5 | | | | | | | |
| EVA = 100 | 75.9 ± 0.1 | 115.3 (EVA 100) | 90 | 860 ± 21 | 174.7 ± 4.7 | 364.3 ± 13.8 | 160 + 2.3 |
| ATH = 100 | | | | | | | |
| PPMT/T2 = 5 | | | | | | | |

- EVA(ethyl vinyl acetate) : ELVAX ® 470 DuPont (19%VA)
- ATH (aluminium trihydroxide): Nabaltec Apyral® 40CD
- PPMT/T1 & PPMT/T2 : Poly(piperazinyl,morpholinyl,triazine); compound of formula II
- HRR : Heat Release Rate
- PkHRR : Peak Heat Release Rate
- THR : Total Heat Release
see also Figure 1, Figure 2 and Figure 3

### Example 2

Study on combustion behaviour and fire performance of polypropylene (PP) based composites

The following materials were used
- PPMT/T1 and /T2 : two samples of Poly(piperazinyl,morpholinyl,triazine); compound of formula II
- PP: Polypropylene, Moplen HP 500N (LyondellBasell)
- MDH: Magnesium hydroxide, APYMAG 60S (Nabaltec)
- CaCO3: Calcium carbonate, Omyacarb 1T-AV (Omya)
- PTFE: Polytetrafluoreethylene, Lubeflon K100 (Polis srl)

The materials were dry-blended in the required proportions and extruded using a twin screw co-rotating extruder Leistriz 18-40D. The resulting granulates were pressed to samples of 100mm x 100mm x 6 mm size and subjected to the cone calorimeter test as described above.

### Table 3: Composition of the studied formulations

**Table 3 Formulations**

| Formulation | 0 | 1 | 2 | 3 | 4 | 5 | 6 | 7 | 8 | 9 | 10 |
|---|---|---|---|---|---|---|---|---|---|---|---|
| Product parts: | | | | | | | | | | | |
| PP | 100 | 100 | 100 | 100 | 100 | 100 | 100 | 100 | 100 | 100 | 100 |
| MDH | 0 | 200 | 150 | 150 | 150 | 150 | 150 | 0 | 0 | 0 | 0 |
| CaCO3 | 0 | 0 | 0 | 0 | 0 | 0 | 0 | 150 | 150 | 150 | 150 |
| PPMT T1 | 0 | 0 | 2.5 | 0 | 0 | 2.5 | 0 | 0 | 5 | 0 | 0 |
| PPMT T2 | 0 | 0 | 0 | 2.5 | 2.5 | 0 | 5 | 0 | 0 | 5 | 5 |
| PTFE | 0 | 0 | 0 | 0 | 0.1 | 0.1 | 0 | 0 | 0 | 0 | 0.1 |

### CONE TEST RESULTS

**Table 4 cone data normalized with non-combustible content**

| | MDH content PHR | CaCO3 Content PHR | Residue (%) after the cone test | % residue based on inorganic Content |
|---|---|---|---|---|
| PP HP 500N | | | 0 | 0 |
| Formulation 1 | 200 | | 51 | 100 |
| Formulation 2 | 150 | | 45 | 117.6 |
| Formulation 3 | 150 | | 40 | 104.5 |
| Formulation 4 | 150 | | 47 | 122.9 |
| Formulation 5 | 150 | | 44 | 115 |
| Formulation 6 | 150 | | 46 | 120 |
| Formulation 7 | | 150 | 57 | 100 |
| Formulation 8 | | 150 | 66 | 116 |
| Formulation 9 | | 150 | 69 | 121 |
| Formulation 10 | | 150 | 62 | 108.8 |

**Table 5 cone data normalized with non-combustible content**

| | PP content (%) | HRR [kW/m2] | HRR [kW/m2] Reduction normalized with PP content (%) | PkHRR [kW/m2] | pkHRR [kW/m2] Reduction normalized with PP content (%) |
|---|---|---|---|---|---|
| PP HP 500N | 100 | 846.1 | - | 1560.1 | - |
| Formulation 1 | 33.3 | 64.5 | 77.1 | 135.7 | 73.9 |
| Formulation 2 | 39.6 | 62.8 | 81.2 | 140.9 | 77.2 |
| Formulation 3 | 39.6 | 67 | 80 | 149.4 | 75.8 |
| Formulation 4 | 39.6 | 62.2 | 81.4 | 134.1 | 78.3 |
| Formulation 5 | 39.6 | 66.1 | 80.3 | 138.6 | 77.6 |
| Formulation 6 | 39.2 | 62.7 | 81.1 | 136.8 | 77.6 |
| Formulation 7 | 40 | 88.3 | 73.9 | 165.3 | 73.5 |
| Formulation 8 | 39.2 | 76.3 | 77.0 | 169.3 | 72.3 |
| Formulation 9 | 39.2 | 85.4 | 74.2 | 159.7 | 73.9 |
| Formulation 10 | 39.2 | 83.4 | 74.8 | 203.0 | 66.8 |

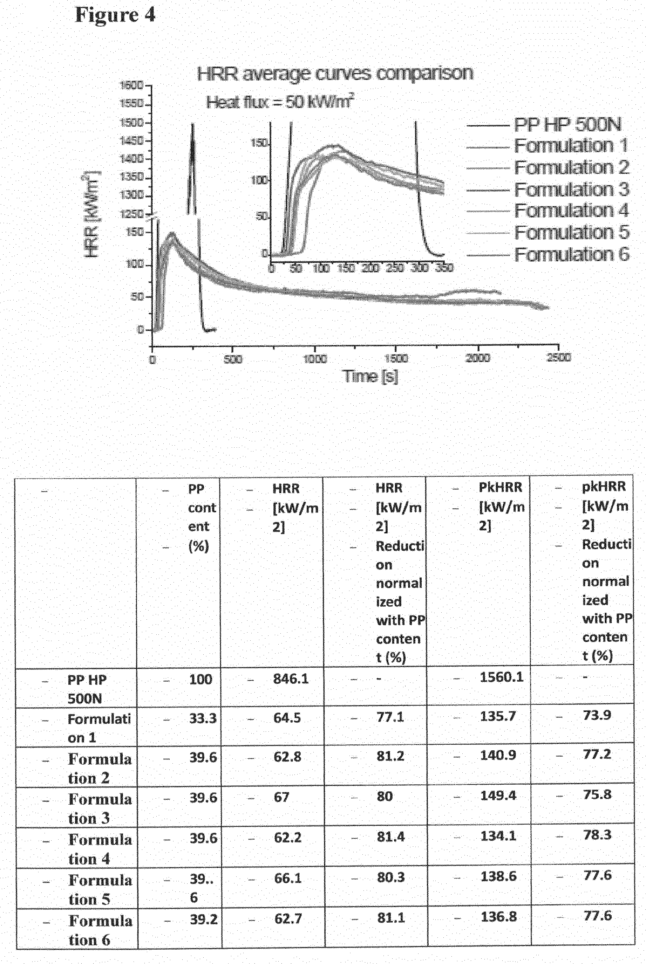

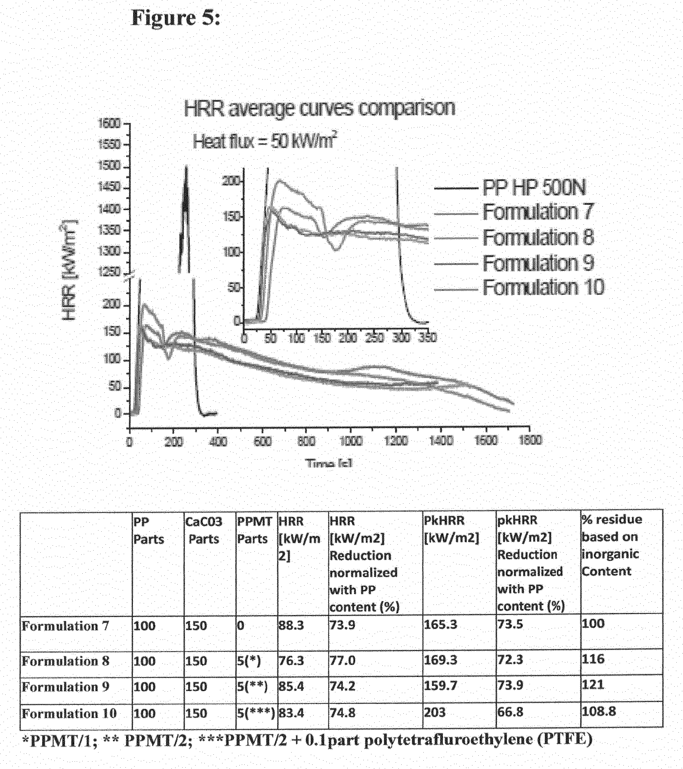

### See also Figures 4 and 5

Summary of the test: With the calculation of reduction of heat release rate normalized by the content of polypropylene (PP), it can be clearly seen that compound of formula II could help to reduce the heat release rate of polypropylene (PP). The Heat Release Rate (HRR) and the peak Heat Release Rate (PkHRR) are reduced by 66.1 to 81.1 %, a measure of the intensity of heat generated in the event of fire (Table 5). Samples containing MDH performed better compared to CaCO3 containing composites.

Moreover, the increased weights of the residues formed at the end of the cone test normalized by the content of non-combustible inorganic materials clearly indicate much slower or in-complete burning in the presence of the compound of Formula II (Table 4), and hence the better fire retardancy

### Example 3

**Combination with phosphinates**

| | Formulation 1 (%) | Formulation 2 (%) | Formulation 3 (%) |
|---|---|---|---|
| Polyamide 61) | 55 | 55 | 55 |
| Glass fibres | 25 | 25 | 25 |
| Aluminium diethylphosphinate 2) | 20 | 15 | 0 |
| Compound of Formula II 3) | 0 | 5 | 0 |
| Melamine polyphosphate 4) | 0 | 0 | 20 |
| Total burning time(s)* | > 250 s | 30 s | >250 s |
| UL 94 V(1.6 mm)* | None | V-0 | None |

| | | | |
|---|---|---|---|
| 1) Ultramid B3S, BASF, 2) Exolite OP 1230, Clariant, 3) MCAPPM Triazine HF 4) Melapur 200, BASF * The total burning time and the UL 94 test of the Underwriters Laboratory are most widely used and recognized test methods (besides more elaborate cone test described and employed above in example 1 and 2) for fire retardancy. The rating is based on the ability to self-extinguish after ignition by a naked flame. The shorter the time, the better the performance | | | |

J. Troitzch: International Plastics Flammability Handbook; Hanse Publishers; Munich-Vienna-New York 1990

### Example 4

**Combination with halogenated flame retardants**

| | Formulation 1 (%) | Formulation 2 (%) | Formulation 3 (%) |
|---|---|---|---|
| PP HP 500N 1) | 75 | 75 | 75 |
| Decabromodiphenyl ethane 2) | 10 | 10 | 0 |
| Compound of Formula II 3) | 0 | 3.75 | 0 |
| ammonium polyphosphate 4) | 15 | 11.25 | 25 |
| Antimony trioxide | 0 | 0 | 0 |
| Total burning time(s) | > 250 s | 12 s | >250 s |
| UL 94V(1.6 mm) | None | V-2 | None |

| | | | |
|---|---|---|---|
| 1) Moplen HP 500N (LyondellBasell) 2 ICL 3) MCA PPM Triazine HF, MCA Technologies GmbH 4) Exolite AP 422, Clariant | | | |

### Example 5

**Combination with NOR (N-alkoxy hindered amines) Technology**

| | Formulation 1 (%) | Formulation 2 (%) | Formulation 3 (%) |
|---|---|---|---|
| PP HP 500N 1) | 84 | 84 | 84 |
| Flamestab NOR 2) | 1 | 1 | 1 |
| Compound of Formula II 3) | 0 | 3.75 | 0 |
| ammonium polyphosphate 4) | 14 | 11.25 | 15 |
| Total burning time(s) | > 250 s | 40 s | >250 s |
| UL 94V(1.6 mm) | None | V-2 | None |

| | | | |
|---|---|---|---|
| 1) Moplen HP 500N (LyondellBasell) 2) BASF 3) MCA PPM Triazine HF, MCA Technologies GmbH 4) Exolite AP 422, Clariant | | | |

### Example 6

Polyester fibres in combination with compound of formula III

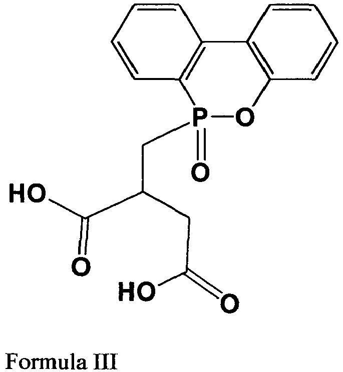

The compound (CAS 63562-33-4) was obtained from Hongwei New Materials Technology Co. Ltd, PR China.

The process of making flame retarded polyester with compound II and Compound of formula III is briefly described as follows:
7.2 kgs of ethylene glycol and 10 kgs of dimethyl terephthalate are subjected to a transesterification process at temperatures between 170 °C and 220°C in the presence of 2.3 g of Mn(OCOCH₃).H₂0 to give the terephthalic acid-glycol ester pre-condensate.

500 g of the compound of Formula III and 3.5 g of Sb₂O₃ are then added at 220°C. The reaction vessel is now evacuated to a pressure of 1mm Hg and heated to 250 °C (reaction mixture temperature) followed by polycondensation at 0.2 mm Hg and 275 °C until a relative viscosity of 1.85 is obtained. To the resulting polymer melt are now added 150 g of the compound of Formula II and stirred for 15 minutes. Thereafter, the polymer is spun into the filaments following the usual process of making polyester fibre filaments.

The burning characteristics of flame retarded polyester are assessed by the common methods like Self Ignition Temperature (DIN 51794), Ignition Temperature (DIN 51794), Limiting Oxygen Index (LOI), Small Burner Test (DIN 53906).

The resisting fire-retarded polyester shows the following characteristics
Self-ignition temperature: 530-550 °C
Ignition temperature; 380-400 °C
LOI: 27

## Claims

1. Polymer compositions containing synergistic blends of (A) metal hydroxides or metal phosphinates retardants or nitrogen based flame retardants or halogen based flame retardants or N-alkoxy hindered amine radical generating flame retardants *without the use of phosphates* and (B) compounds of Formula I 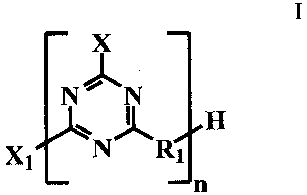 wherein
X is a halogen
or 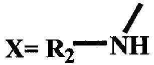 or a heterocyclic radical containing in the ring at least one nitrogen atom which radical is linked to the triazine ring through one of such nitrogen atoms,
R₂ is alkyl or cycloalkyl,
R₁ is a divalent radical of piperazine of the formula 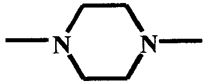
or a divalent radical of the type 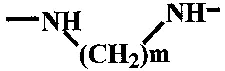 or 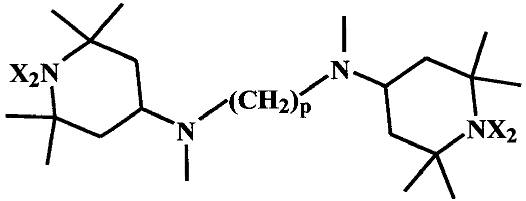
n is an integer from 2 to 30, extremes included,
m is an integer from 2 to 6, extremes included,
p is an integer from 2 to 12, extremes included, and
X₁= OH, NH2 or X whereby X and X₁ may be the same or different,
X₂= Hydrogen or a C₁-C₄ alkyl group.

2. Use of the polymer compositions of claim 1 for electric and electronic applications

3. Use of the polymer compositions of claim 1 for cable applications

4. Use of polymer compositions of claim 1 for outdoor and construction applications

5. Polymer compositions according to claim 1 comprising ethyl vinyl acetate as the main polymer

6. Polymer compositions according to claim 1 comprising a polyolefinic polymer or copolymer as the main polymer

7. Polymer compositions according to claim 1 comprising polyamides or polyesters as the main polymer

8. Polymer compositions according to claim 1 comprising 0.1 to 10 % by weight of the compound of Formula I

9. Polymer compositions according to claim 9 comprising 0.5 to 7.5 % by weight of the compound of Formula I

## Patentansprüche

1. Polymere Zubereitungen, die synergistische Mischungen von (A) Metallhydroxiden oder Metallphosphinaten als Flammhemmer oder Flammhemmer auf Basis von Stickstoff oder Flammhemmer auf Basis von Halogen oder Flammhemmer, die N-alkoxy hindered amine Radikale generieren, *ohne Phosphate zu verwenden* und (B) Verbindungen der Formel I enthalten 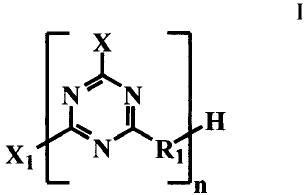 worin
X ein Halogen ist oder 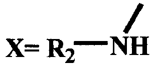 oder ein heterocyclisches Radikal mit mindestens einem Stickstoffatom im Ring welches Radikal durch eines dieser Stickstoffatome an den Triazinring gebunden ist,
R₂ Alkyl oder Cycloalkyl ist,
R₁ ist ein divalentes Radikal von Piperazin der Formel 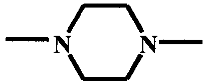
oder ein divalentes Radikal vom Typ 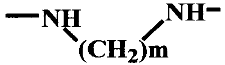 oder 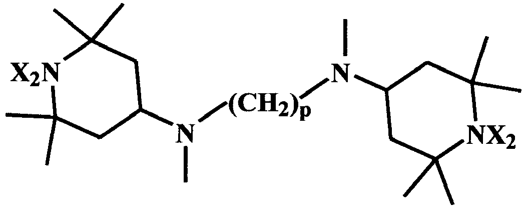
n ist eine Zahl von 2 bis 30, die Extremen eingeschlossen,
m ist eine Zahl von 2 bis 6, die Extremen eingeschlossen,
p ist eine Zahl von 2 bis 12, die Extremen eingeschlossen, und
X₁= OH, NH2 oder X wobei X und X₁ gleich oder verschieden sein können,
X₂= Wasserstoff oder eine C₁-C₄ Alkylgruppe.

2. Verwendung der polymeren Zubereitungen von Anspruch 1 für elektrische und elektronische Anwendungen

3. Verwendung der polymeren Zubereitungen von Anspruch 1 für Kabelanwendungen

4. Verwendung der polymeren Zubereitungen von Anspruch 1 für Aussen- und Bau-Anwendungen

5. Polymere Zubereitungen gemäss Anspruch 1 mit Aethyl-vinyl-acetat als das Hauptpolymer

6. Polymere Zubereitungen gemäss Anspruch 1 mit einem Polyolefin-polymer oder copolymer als das Hauptpolymer

7. Polymere Zubereitungen gemäss Anspruch 1 mit Polyamiden oder Polyester als das Hauptpolymer

8. Polymere Zubereitungen gemäss Anspruch 1 mit 0.1 bis 10 Gew. % der Verbindung der Formel I

9. Polymere Zubereitungen gemäss Anspruch 9 mit 0.5 bis 7.5 Gew. % der Verbindung der Formel I

## Revendications

1. Compositions polymères contenant des mélanges synergistiques de (A) hydroxides ou phosphinates de métal comme retardant des flammes ou des retardants des flammes sur la base de nitrogène ou des retardants des flammes sur la base de halogène ou des retardants des flammes, qui génères des radicaux N-alkoxy hindered amine, *sans l'utilisation de phosphates* et (B) des composés de la Formule I 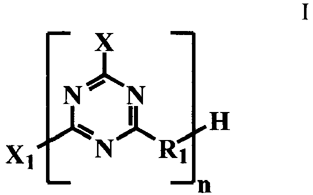 dans laquelle
X est un halogène ou 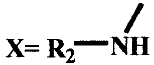 ou un radical héterocyclique avec au moins un atome nitrogène dans l'anneau, lequel radical est lié par un des atomes de nitrogène au cycle triazine,
R₂ est alkyl ou cycloalkyl,
R₁ est un radical divalent de pipérazine de la Formule 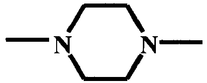
ou un radical divalent du type 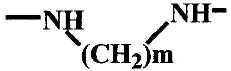 ou 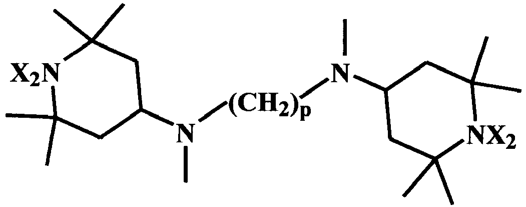
n est un nombre de 2 à 30, les extrèmes incluses,
m est un nombre de 2 à 6, les extrèmes incluses,
p est un nombre de 2 à 12, les extrèmes incluses, et
X₁= OH, NH2 ou X et X et X1 peuvent être les mèmes ou différents,
X₂= hydrogène ou un groupe alkyl C₁-C₄ .

2. Utilisation des compositions polymères selon la revendication1 pour des applications electriques et electroniques

3. Utilisation des compositions polymères selon la revendication 1 pour des applications de cables

4. Utilisation des compositions polymères selon la revendication 1 pour des applications à l'extérieur ou dans la construction

5. Compositions polymères selon la revendication 1 avec un polymère ethyl-vinyl-acetate comme polymère principal

6. Compositions polymères selon la revendication 1 avec un polymère ou copolymère de polyoléfine comme polymère principal

7. Compositions polymères selon la revendication 1 avec des polyamides ou des polyesters comme polymère principal

8. Compositions polymères selon la revendication 1 contenant 0.1 à 10 % de poids du composé de la Formule I

9. Compositions polymères selon la revendication 9 contenant 0.5 à 7.5 % de poids du composé de la Formule I
